# EUROPÄISCHE PATENTSCHRIFT

(11) **EP 0 705 792 B1**
(45) Veröffentlichungstag und Bekanntmachung des Hinweises auf die Patenterteilung: **31.03.1999**
(21) Anmeldenummer: 95113966.6
(22) Anmeldetag: 06.09.1995
(51) Int. Cl.: C01B 33/12

(54) **Verfahren zur Verbesserung der Qualität von Quarzsand**
Process for improving the quality of quartz sand
Procédé pour améliorer la qualité de sable de quartz

(30) Priorität: 05.10.1994 DE 4435568
(43) Veröffentlichungstag der Anmeldung: 10.04.1996
(73) Patentinhaber: Clariant GmbH, 65929 Frankfurt am Main (DE)
(72) Erfinder: Ewald, Dirk, D-50354 Hürth (DE); Tapper, Alexander, Dr., D-41239 Mönchengladbach (DE); Schimmel, Günther, Dr., D-50374 Erftstadt (DE); Wilkens, Jan, Dr., D-50354 Hürth (DE)

(56) Entgegenhaltungen:
- EP-A- 0 233 665
- GB-A- 2 111 035
- US-A- 2 049 359
- DATABASE WPI Week 8604 Derwent Publications Ltd., London, GB; AN 86-024624 & JP-A-60 246 241 (NIPPON SHEET GLASS KK) , 5.Dezember 1985
- DATABASE WPI Week 8307 Derwent Publications Ltd., London, GB; AN 83-17053k & SU-A-920 009 (GEN INORGANIC CHEM) , 15.April 1982
- DATABASE WPI Week 7032 Derwent Publications Ltd., London, GB; AN 70-57122r & JP-B-45 023 605 (HANADA T)

## Beschreibung

In modernen Waschmitteln sind als Builder häufig Alkalischichtsilikate enthalten. Dabei sind Alkalischichtsilikate aus Wasserglaslösung erhältlich, welche beispielsweise durch Hydrothermalaufschluß von Quarzsand mit Alkalilauge hergestellt werden kann.

Der Weißgrad der Alkalischichtsilikate hängt von der Qualität der zu ihrer Herstellung verwendeten Wasserglaslösung ab. Bei Verwendung hochreiner Alkalilauge wird eine evtl. Färbung der Wasserglaslösung nur durch Verunreinigungen im Quarzsand verursacht, beispielsweise durch aus abgestorbenem Pflanzenmaterial entstandene Huminsäuren.

Daneben ist es aus US-A-2 049 359 bekannt, aus technischem Wasserglas Fällungs Kieselsäuren herzustellen, die mit H₂O₂-haltiger, verdünnter Schwefelsäure behandelt werden, um aus dem Wasserglas stammende, oxidische Ti- und Fe- Verunreinigungen zu entfernen.

Die Bestimmung der Qualität eines Quarzsandes im Hinblick auf organische Inhaltsstoffe erfolgt durch Messung der Transmission der Flüssigkeit, welche durch sein Auslaugen mit Natronlauge erhalten wurde. Unterschreitet die Transmission des alkalischen Eluates einen vorgegebenen Wert, so ist dieser Quarzsand zur Herstellung von Alkalischichtsilikaten mit hohem Weißgrad nicht geeignet.

Es ist Aufgabe der vorliegenden Erfindung, ein Verfahren anzugeben, durch welches aus huminsäurehaltigen Quarzsanden hochwertige Quarzsande erhältlich sind. Diese hochwertigen Quarzsande sind neben anderen Anwendungen zur Gewinnung von Wasserglaslösungen geeignet, aus denen Alkalischichtsilikate mit hohem Weißgrad herstellbar sind. Erfindungsgemäß wird dies dadurch erreicht, daß man den Quarzsand großflächig ausbreitet, daß man die Oberfläche des Quarzsandes mit Wasserstoffperoxid-Lösung besprüht, daß man den Quarzsand durchmischt und daß man den durchmischten Quarzsand bei erhöhter Temperatur behandelt.

Das Verfahren gemäß der Erfindung kann weiterhin wahlweise auch noch dadurch ausgestaltet sein, daß
a) der ausgebreitete Quarzsand eine Schichtdicke von 5 bis 40 mm aufweist;.
b) die Schichtdicke 15 bis 25 mm beträgt;
c) man den Quarzsand mit einer 3 bis 30 gewichtsprozentigen Wasserstoffperoxid-Lösung besprüht;.
d) mit 0,05 bis 5 Gewichts% Wasserstoffperoxid-Lösung, bezogen auf den Quarzsand, besprüht wird;
e) man den Quarzsand bei Temperaturen von 40 bis 200 °C behandelt;
f) die Behandlungstemperatur 50 bis 150 °C beträgt;
g) der eingesetzte Quarzsand einen Wassergehalt von 1 bis 10 Gewichts% aufweist.

In den folgenden Beispielen sind ermittelt:

### A) Transmissionswert (in Anlehnung an TGL 14 317/12)

50 g getrockneter Quarzsand werden mit 100 g 40 %iger Natronlauge versetzt und unter Rühren erhitzt und eine Minute aufgekocht. Danach läßt man die Probe abkühlen und absitzen. Die überstehende Lösung zentrifugiert man 15 Minuten mit 5000 Upm. Zur Ermittlung der Transmission gibt man die klare Lösung in eine 2 cm-Küvette und mißt in einem ELKO-Photometer bei einer Wellenlänge von 436 nm gegen destilliertes Wasser.

### B) Weißgrad

Die Messung der Alkalischichtsilikate erfolgt gegen BaSO₄ p.a. mit Hilfe eines LANGE-Spektralphotometers. Dabei erfolgt die Auswertung nach dem von JUDD und HUNTER entwickelten CIE-L*a*b*-System, wobei sich die drei Maßzahlen L*, a* und b* direkt aus den Normfarbwerten X, Y und Z errechnen lassen.

### Beispiel 1 (Vergleichsbeispiel)

Ein aus einer Grube A stammender Quarzsand mit einem Wassergehalt von 3,9 Gewichts% wies einen Transmissionswert von 62,5 % auf; der Weißgrad eines daraus hergestellten Schichtsilikates vom Typ SKS-6 (Na₂Si₂O₅) betrug
- L*:: 88,5 %
- a*:: 0,86
- b*:: 0,56

### Beispiel 2 (Vergleichsbeispiel)

Ein aus einer Grube B stammender Quarzsand mit einem Wassergehalt von 3,2 Gewichts% wies einen Transmissionswert von 80,9 % auf; der Weißgrad eines daraus hergestellten Schichtsilikates vom Typ SKS-6 (Na₂Si₂O₅) betrug
- L*:: 89,7 %
- a*:: 0,29
- b*:: 0,43

### Beispiel 3 (gemäß der Erfindung)

1000 g Quarzsand aus der Grube A wurden großflächig in einer Schichtdicke von 15 bis 25 mm ausgebreitet. Die Oberfläche des Quarzsandes wurde mit 0,1 Gewichts%, bezogen auf den Quarzsand, einer 30 %igen Wasserstoffperoxid-Lösung besprüht. Schließlich wurde der besprühte Quarzsand durchgemischt und 3 Stunden auf 100 °C erhitzt.

Der Transmissionswert des so behandelten Quarzsandes betrug 72,0 %; der Weißgrad eines daraus hergestellten Schichtsilikates vom Typ SKS-6 betrug
- L*:: 92,0%
- a*:: 0,23
- b*:: 0,18

### Beispiel 4 (gemäß der Erfindung)

Beispiel 3 wurde mit der Änderung wiederholt, daß mit 1 %, bezogen auf den Quarzsand, einer 3 %igen Wasserstoffperoxid-Lösung besprüht wurde.

Der Transmissionswert des so behandelten Quarzsandes betrug 67,4 %; der Weißgrad eines daraus hergestellten Schichtsilikates vom Typ SKS-6 betrug
- L*:: 90,4%
- a*: 0,72
- b*:: 0,48

### Beispiel 5 (gemäß der Erfindung)

1000 g Quarzsand aus der Grube B wurden großflächig in einer Schichtdicke von 15 bis 25 mm ausgebreitet. Die Oberfläche des Quarzsandes wurde mit 0,1 %, bezogen auf den Quarzsand, einer 30 %igen Wasserstoffperoxid-Lösung besprüht. Schließlich wurde der besprühte Quarzsand durchgemischt und 3 Stunden auf 100 °C erhitzt.

Der Transmissionswert des so behandelten Quarzsandes betrug 99,4 % ; der Weißgrad eines daraus hergestellten Schichtsilikates vom Typ SKS-6 betrug
- L*:: 96,3%
- a*:: 0,02
- b*:: 0,02

## Patentansprüche

1. Verfahren zur Verbesserung der Qualität von Quarzsand, dadurch gekennzeichnet, daß man den Quarzsand großflächig ausbreitet, daß man die Oberfläche des Quarzsandes mit Wasserstoffperoxid-Lösung besprüht, daß man den Quarzsand durchmischt und daß man den durchmischten Quarzsand bei erhöhter Temperatur behandelt.

2. Verfahren nach Anspruch 1, dadurch gekennzeichnet, daß der ausgebreitete Quarzsand eine Schichtdicke von 5 bis 40 mm aufweist.

3. Verfahren nach Anspruch 2, dadurch gekennzeichnet, daß die Schichtdicke 15 bis 25 mm beträgt.

4. Verfahren nach mindestens einem der Ansprüche 1 bis 3, dadurch gekennzeichnet, daß man den Quarzsand mit einer 3 bis 30 gewichtsprozentigen Wasserstoffperoxid-Lösung besprüht.

5. Verfahren nach mindestens einem der Ansprüche 1 bis 4, dadurch gekennzeichnet, daß mit 0,05 bis 5 Gewichts% Wasserstoffperoxid-Lösung, bezogen auf den Quarzsand, besprüht wird.

6. Verfahren nach mindestens einem der Ansprüche 1 bis 5, dadurch gekennzeichnet, daß man den Quarzsand bei Temperaturen von 40 bis 200 °C behandelt.

7. Verfahren nach Anspruch 6, dadurch gekennzeichnet, daß die Behandlungstemperatur 50 bis 150 °C beträgt.

8. Verfahren nach mindestens einem der Ansprüche 1 bis 7, dadurch gekennzeichnet, daß der eingesetzte Quarzsand einen Wassergehalt von 1 bis 10 Gewichts% aufweist.

## Claims

1. A process for improving the quality of quartz sand, which comprises spreading the quartz sand out over a large area, spraying the surface of the quartz sand with hydrogen peroxide solution, mixing the quartz sand and treating the mixed quartz sand at elevated temperature.

2. The process as claimed in claim 1, wherein the spread-out quartz sand has a layer thickness of from 5 to 40 mm.

3. The process as claimed in claim 2, wherein the layer thickness is from 15 to 25 mm.

4. The process as claimed in at least one of claims 1 to 3, wherein the quartz sand is sprayed with a hydrogen peroxide solution having a strength of from 3 to 30 percent by weight.

5. The process as claimed in at least one of claims 1 to 4, wherein spraying is carried out using from 0.05 to 5% by weight of hydrogen peroxide solution, based on the quartz sand.

6. The process as claimed in at least one of claims 1 to 5, wherein the quartz sand is treated at temperatures of from 40 to 200°C.

7. The process as claimed in claim 6, wherein the treatment temperature is from 50 to 150°C.

8. The process as claimed in at least one of claims 1 to 7, wherein the quartz sand used has a water content of from 1 to 10% by weight.

## Revendications

1. Procédé pour améliorer la qualité du sable siliceux, caractérisé en ce que l'on étale le sable siliceux sur une grande surface, en ce que l'on asperge la surface du sable siliceux avec une solution de peroxyde d'hydrogène, en ce que l'on mélange le sable siliceux et en ce que l'on traite à une température augmentée le sable siliceux mélangé.

2. Procédé selon la revendication 1, caractérisé en ce que le sable siliceux étaié présente une épaisseur de couche de 5 à 40 mm.

3. Procédé selon la revendication 2, caractérisé en ce que l'épaisseur de couche est de 15 à 25 mm.

4. Procédé selon au moins l'une des revendications 1 à 3, caractérisé en ce que l'on asperge le sable siliceux avec une solution de peroxyde d'hydrogène à 3 à 30 % en masse.

5. Procédé selon au moins l'une des revendications 1 à 4, caractérisé en ce que l'on asperge avec 0,05 à 5 % en masse de solution de peroxyde d'hydrogène par rapport au sable siliceux.

6. Procédé selon au moins l'une des revendications 1 à 5, caractérisé en ce que l'on traite le sable siliceux à des températures de 40 à 200°C.

7. Procédé selon la revendication 6, caractérisé en ce que la température de traitement est de 50 à 150°C.

8. Procédé selon au moins l'une des revendications 1 à 7, caractérisé en ce que le sable siliceux utilisé présente une teneur en eau de 1 à 10 % en masse.
